# EUROPÄISCHE PATENTANMELDUNG

(11) **EP 2 020 589 A2**
(43) Veröffentlichungstag der Anmeldung: **04.02.2009**
(21) Anmeldenummer: 08011670.0
(22) Anmeldetag: 27.06.2008
(51) Int. Cl.: G01C 21/34

(54) **Verfahren zur Anzeige einer Manöverschemaansicht in einem Navigationssystem**

(30) Priorität: 02.08.2007 DE 102007036627
(71) Anmelder: Navigon AG, 20251 Hamburg (DE)
(72) Erfinder: Schmidt, Thorsten, W., 97318 Kitzingen (DE)
(74) Vertreter: von den Steinen, Axel

(57) **Zusammenfassung**

Die Erfindung betrifft ein Verfahren zum Betrieb eines Navigationssystems mit folgenden Verfahrensschritten:
a) Berechnung einer Route (04) von einem Startpunkt zu einem Zielpunkt (03), wobei die Route (04) aus einer Folge von Streckensegmenten und Knotenpunkten zwischen den Streckensegmenten besteht,
b) Berechnung zumindest einer Manöveranweisung, die Anweisungen für den Benutzer enthält, um ausgehend vom aktuellen Standpunkt der Route (04) zu folgen,
c) Berechnung und Anzeige einer Manöverschemaansicht (05) an einer Anzeigeeinrichtung, wobei bei der Berechnung der Manöverschemaansicht (05) auch benachbarte Knotenpunkte, die nicht auf der Route (04) liegen, und/oder benachbarte Streckensegmente, die nicht auf der Route (04) liegen und keinen Knotenpunkt auf der Route (04) berühren, analysiert werden, und wobei bei Anzeige der Manöverschemaansicht (05) zumindest ein Teil der benachbarten Streckensegmente und/oder benachbarten Knotenpunkte ergänzend zu der die Route (04) darstellenden Manöveranweisung angezeigt wird.

## Beschreibung

Die Erfindung betrifft ein Verfahren zum Betrieb eines Navigationssystems nach dem Oberbegriff des Anspruchs 1.

Gattungsgemäße Navigationssysteme werden beispielsweise als mobile Navigationsgeräte eingesetzt, um den Fahrer eines Kraftfahrzeugs von einem Startpunkt zu einem Zielpunkt zu führen. Das Navigationsgerät fragt dabei die Daten aus einer Datenbank ab, in der ein geographisches Gebiet durch Streckensegmente und Knotenpunkte beschrieben ist. Im Ergebnis beinhaltet die Datenbank also ein Netz aus Streckensegmenten und dazwischen gelegenen Knotenpunkten, die das Wegenetz, insbesondere das Straßennetz, in einer Form beschreiben und so eine Verarbeitung in einer Datenverarbeitungsanlage durch entsprechende Rechenalgorithmen erlauben. Mittels eines geeigneten Routingberechnungsverfahrens wird aus diesen Daten der Datenbank eine Route in der Form einer Folge von Streckensegmenten und Knotenpunkten selektiert, die den Benutzer vom Startpunkt zum Zielpunkt führt.

Bekannte Navigationssysteme berechnen aber nicht nur die Route vom Startpunkt zum Zielpunkt. Darüber hinaus werden von den Navigationssystemen auch Manöveranweisungen berechnet, die Anweisungen für den Benutzer enthalten, um ausgehend vom aktuellen Standpunkt der Route Manöver auszuführen, die der Route folgen. Gelangt der Benutzer beispielsweise an eine Straßenkreuzung, so wird eine Manöveranweisung berechnet, die dem Benutzer angibt, in welche Richtung er an der Straßenkreuzung abzubiegen hat.

Für die Ausgabe der Manöveranweisung an den Benutzer gibt es verschiedene Möglichkeiten. Üblicherweise wird die Manöveranweisung in der Form einer Sprachansage akustisch ausgegeben. Bei einem Abbiegevorgang an einer Kreuzung kann beispielsweise die Ansage erfolgen: "An der nächsten Kreuzung bitte links abbiegen". Die akustisch ausgegebenen Manöveranweisungen haben jedoch den Nachteil, dass sie dem Benutzer nach der Ansage nicht mehr fortlaufend zur Verfügung stehen. Hat der Benutzer die akustische Manöveranweisung nicht verstanden, muss die Manöveranweisung entweder wiederholt werden, oder der Benutzer muss ohne Manöveranweisung weitermanövrieren. Um dieses Problem zu lösen, sind bei bekannten Navigationssystemen so genannte Manöverschemaansichten bekannt. In der Manöverschemaansicht wird zumindest das nächste und/oder übernächste auszuführende Manöver in schematisierter Form grafisch dargestellt und diese grafische Darstellung an einer Anzeigeeinrichtung bis zum Durchfahren des entsprechenden Manövers dauerhaft angezeigt. Gelangt der Benutzer beispielsweise an eine Kreuzung von zwei Straßen, kann an der Manöverschemaansicht eine schematisierte Straßenkreuzung in Form eines rechtwinkligen Kreuzes und die entsprechend der Manöveranweisung erforderliche Abbiegerichtung in der Form eines Bewegungspfeils angezeigt werden.

Die Berechnung und Anzeige der Manöverschemaansicht stellt einen zusätzlichen Rechenprozess beim Betrieb eines Navigationssystems dar, der insbesondere beim Echtzeitbetrieb auf mobilen Navigationsgeräten zeitkritisch ist. Bei der aus dem Stand der Technik bekannten Berechnung der Manöverschemaansicht wird deshalb allein auf Daten zurückgegriffen, die bereits aus der Routenberechnung bekannt sind. Dies bedeutet mit anderen Worten, dass bei den bekannten Verfahren zur Berechnung und Anzeige einer Manöverschemaansicht nur solche Knotenpunkte und Streckenabschnitte Berücksichtigung finden, die auf der Route selbst liegen. Darüber hinaus können auch noch Streckenabschnitte in die Manöverschemaansicht einbezogen sein, die die berechnete Route schneiden oder berühren, d.h. zumindest einen Knotenpunkt mit der Route gemeinsam haben. Diese Art der Berechnung der Manöverschemaansicht beruht auf der Überlegung, dass es für den Benutzer zur Ausführung des Manövers ausreicht, wenn ihm in der Manöverschemaansicht die Straßen und Knotenpunkte auf der Route angezeigt werden.

In der Praxis hat sich diese Überlegung jedoch als in manchen Fällen unzutreffend erwiesen. Insbesondere bei unübersichtlichen Straßenverläufen, beispielsweise an Kreuzungen mit einer Vielzahl von einmündenden Straßen, ist es für die optimale Orientierung des Benutzers nicht ausreichend, wenn ihm nur die Straßen und Knotenpunkte, die auf der Route liegen, in der Manöverschemaansicht angezeigt werden. Vielmehr kann eine solche Manöverschemaansicht, die die tatsächliche Straßensituation nur teilweise darstellt, zur Verwirrung des Benutzers beitragen, da beispielsweise an einer unübersichtlichen Kreuzung nicht erkennbar ist, in welche der verschiedenen Straßen der Benutzer einbiegen soll. Akustisch bzw. optisch angezeigte Manöveranweisungen haben im Ergebnis also den Nachteil, dass sie vielfach nicht eindeutig sind.

Ausgehend von diesem Stand der Technik ist es deshalb Aufgabe der vorliegenden Erfindung, ein neues Verfahren zum Betrieb eines Navigationssystems vorzuschlagen, das die Orientierung des Benutzers durch Berechnung und Anzeige einer verbesserten Manöverschemaansicht erleichtert.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf der Grundüberlegung, dass es für die eindeutige Orientierung des Benutzers in manchen Straßensituationen erforderlich ist, dass die Straßensituation in der benachbarten Umgebung zum nächsten Manöver vollständig angezeigt wird. Münden auf einen Platz beispielsweise sechs Straßen, so ist es für die Orientierung des Fahrers anhand der Manöverschemaansicht nicht ausreichend, wenn in der Manöverschemaansicht lediglich der Platz und nur die beiden Straßen, entlang derer der Platz gemäß der vorberechneten Route überquert wird, in der Manöverschemaansicht eingeblendet werden. Eine korrekte Orientierung ist erst möglich, wenn der gesamte Platz mit allen zu- und abführenden Straßen eingeblendet wird, wobei die gemäß der Route zu wählende Zufahrt bzw. Abfahrt geeignet gekennzeichnet werden muss, beispielsweise durch eine entsprechende Farbgebung.

Um dies zu erreichen, wird bei der erfindungsgemäßen Berechnung der Manöverschemaansicht die Analyse der umgebenden Straßensituation erweitert. In die Analyse werden nämlich auch zum aktuellen Standpunkt benachbarte Knotenpunkte, die nicht auf der Route liegen, und/oder zum aktuellen Standpunkt benachbarte Streckensegmente, die nicht auf der Route liegen und keinen Knotenpunkt auf der Route berühren, einbezogen. In Abhängigkeit welcher Entscheidungskriterien Knotenpunkte und Streckensegmente als "benachbart" relativ zum aktuellen Standpunkt bzw. relativ zum nächsten auszuführenden Manöver klassifiziert werden, ist grundsätzlich beliebig. Beispielsweise könnte um jedes Manöver ein Analysegebiet vorbestimmter Größe gelegt werden, wobei die Straßensituation in diesem vorbestimmten Analysegebiet dann vollständig analysiert und in der Manöverschemaansicht angezeigt wird.

Das erfindungsgemäße Verfahren ist grundsätzlich geeignet, dem Benutzer eine eindeutige Orientierung in unübersichtlichen Straßensituationen durch Betrachtung der Manöverschemaansicht zu geben. Von grundsätzlicher Bedeutung ist dieser verbesserte Ansatz zur Orientierung des Benutzers bei Manövern in einem Kreisverkehr. Übliche Kreisverkehrsstraßen weisen eine kreisförmig angelegte Fahrbahn auf. Führt die vom Navigationssystem berechnete Route über ein Streckensegment, das als Teil eines Kreisverkehrs gekennzeichnet ist, beispielsweise durch Abspeicherung einer entsprechenden Kreisverkehrskennung, wird bei bekannten Systemen ein Kreissymbol in die Manöverschemaansicht eingeblendet. Die Einblendung dieses Kreissymbols in die Manöverschemaansicht beruht dabei allein auf der Feststellung, dass zumindest ein Streckensegment der berechneten Route Teil eines Kreisverkehrs ist. Die tatsächlichen örtlichen Gegebenheiten werden durch die Einblendung des Kreissymbols in der Manöverschemaansicht häufig nicht widergespiegelt, so dass sich der Fahrer beim Befahren des Kreisverkehrs bei den bekannten Systemen nur schwer an der Darstellung in der Manöverschemaansicht orientieren kann.

Gemäß einer bevorzugten Ausführungsform der Erfindung wird deshalb vorgeschlagen, bei der Berechnung der Manöverschemaansicht zur grafisch schematisierten Darstellung eines Manövers in einem Kreisverkehr auch Knotenpunkte und Streckensegmente des Kreisverkehrs in die Analyse zur Berechnung der Manöverschemaansicht einzubeziehen, die nicht auf der Route liegen. Dadurch kann insbesondere der geometrische Aufbau des Kreisverkehrs auch hinsichtlich der entlang der Route nicht zu befahrenden Teile analysiert und in der Manöverschemaansicht entsprechend dargestellt werden. Additiv bzw. alternativ zur Analyse der nicht auf der Route liegenden Knotenpunkte und Streckensegmente des Kreisverkehrs können in die die Berechnung der Manöverschemaansicht vorbereitenden Analysen auch Streckensegmente einbezogen werden, die nicht Teil des Kreisverkehrs sind, aber zumindest einen Knotenpunkt des Kreisverkehrs berühren. Dadurch können insbesondere Einfahrten und Ausfahrten des Kreisverkehrs, also Straßenteile, die mit einem Ende in den Kreisverkehr münden, in die Analyse einbezogen und anschließend in der Manöverschemaansicht angezeigt werden.

Im Ergebnis wird es durch diesen Ansatz ermöglicht, den tatsächlichen geometrischen Aufbau des Kreisverkehrs in der Manöverschemaansicht intuitiv erkennbar darzustellen.

Die qualitativ besten Manöverschemaansichten werden erreicht, wenn alle Streckensegmente und alle Knotenpunkte, die Bestandteil des Kreisverkehrs sind, und/oder alle Streckensegmente, die einen Knotenpunkt des Kreisverkehrs berühren, in die Analyse zur Berechnung der Manöverschemaansicht einbezogen werden.

Um Kreisverkehre in der Manöverschemaansicht in einer Weise darstellen zu können, die intuitiv gut erkennbar ist und eine hohe Übereinstimmung mit der tatsächlichen Straßensituation aufweist, ist die Relativanordnung des Mittelpunkts des Kreisverkehrs von größter Bedeutung.

Bei bekannten Systemen wird der tatsächliche Mittelpunkt des Kreisverkehrs jedoch üblicherweise nicht berücksichtigt. Vielmehr wird vielfach angenommen, dass der Mittelpunkt des Kreisverkehrs sich im Schnittpunkt der auf den Kreisverkehr einmündenden Straßen befindet. Bei Kreisverkehren, bei denen die Straßen strahlenförmig vom Kreisverkehr abgehen, führt diese Annahme zu befriedigenden Ergebnissen. Bei Kreisverkehren, die von dieser Idealvorstellung abweichen, beispielsweise weil die einmündenden Straßen unter einem stumpfen bzw. spitzen Winkel auf den Kreisverkehr treffen, führt dieser Ansatz zu Fehlinterpretationen, die eine missverständliche Darstellung des Kreisverkehrs in der Manöveransicht verursachen. Zur Vermeidung dieser Fehler wird deshalb vorgeschlagen, dass die Daten der Streckensegmente und/oder der Knotenpunkte, die Bestandteil des Kreisverkehrs sind, und zwar unabhängig davon, ob diese Streckensegmente und Knotenpunkte zugleich auch Bestandteil der Route sind, dahingehend ausgewertet werden, dass die Lage des Mittelpunktes des Kreisverkehrs aus diesen Daten abgeleitet wird. Die relative Lage des Mittelpunktes des Kreisverkehrs kann dann insbesondere bei der Berechnung und Anzeige der Manöverschemaansicht Berücksichtigung finden.

Sind die Streckensegmente und Knotenpunkte in der Datenbank durch ihre X-Koordinaten und Y-Koordinaten kodiert, kann die Berechnung des Mittelpunkts des Kreisverkehrs in sehr einfacher Weise erfolgen. In einem ersten Rechenschritt werden alle X-Koordinaten der Knotenpunkte und/oder der Streckensegmente addiert, und die Summe wird anschließend durch die Anzahl der Knotenpunkte und/oder Streckensegmente dividiert. Das Divisionsergebnis ergibt dann die X-Koordinate des Mittelpunkts des Kreisverkehrs. Die gleiche Berechnung kann dann in einem zweiten Schritt für die Y-Koordinate wiederholt werden, um auf diese Weise die Y-Koordinate des Mittelpunkts des Kreisverkehrs zu ermitteln. Sind X-Koordinate und Y-Koordinate des Mittelpunkts des Kreisverkehrs bekannt, kann bei allen weiteren Analysen zur Berechnung der Manöverschemaansicht auf diese Koordinaten, die die Relativlage des Mittelpunkts des Kreisverkehrs relativ zu allen anderen in der Datenbank gespeicherten Streckensegmenten bzw. Knotenpunkten beschreiben, zurückgegriffen werden.

Bei den bekannten Navigationssystemen wird in der Manöverschemaansicht immer dann ein Kreisverkehrssymbol, üblicherweise ein Kreisring, eingeblendet, wenn auf der zu befahrenden Route zumindest ein Streckensegment vorhanden ist, das als Teil eines Kreisverkehrs gekennzeichnet ist. Das entsprechende Streckensegment kann beispielsweise in der Datenbank mit einem Kreisverkehrsattribut abgespeichert sein. Neben dem Kreisverkehrssymbol wird dann außerdem noch die Straße der Route, über die der Benutzer in den Kreisverkehr einfährt, und die Straße der Route, über die der Benutzer den Kreisverkehr wieder verlässt, in der Manöverschemaansicht eingeblendet. Allgemein sollen Straßen, die auf einen Kreisverkehr einmünden bzw. aus einem Kreisverkehr hinausführen, als Mündungsstraßen bezeichnet werden.

Bei verbesserten Navigationssystemen ist es auch bekannt, dass neben den auf der Route liegenden Mündungsstraßen auch noch die Mündungsstraßen des Kreisverkehrs in der Manöverschemaansicht symbolisierend dargestellt werden, die an einem Knotenpunkt, der seinerseits wiederum auf der Route liegt, den Kreisverkehr berühren. Die Anzeige der Mündungsstraßen gemäß dem vorbekannten Stand der Technik ist also gänzlich routenbezogen, so dass nur solche Mündungsstraßen des Kreisverkehrs in der Manöverschemaansicht angezeigt werden, die auf der Route liegen bzw. einen Knotenpunkt berühren, der wiederum auf der Route liegt. Mündungsstraßen des Kreisverkehrs, die dagegen nicht auf der Route liegen und auch keinen Knotenpunkt berühren, der auf der Route liegt, werden bei bekannten Navigationssystemen in der Manöverschemaansicht nicht angezeigt. Dies ist von erheblichem Nachteil. Dies einmal deswegen, da an Straßenschildern, die die an einem Kreisverkehr befahrbaren Mündungsstraßen anzeigen, normalerweise alle Mündungsstraßen dargestellt sind. Diese Diskrepanz in der Darstellung des Kreisverkehrs mit seinen Mündungsstraßen zwischen der Manöverschemaansicht und den Straßenschildern kann leicht zur Verwirrung des Benutzers führen.

Außerdem kann die nur teilweise Darstellung der Mündungsstraßen des Kreisverkehrs in der Manöverschemaansicht in für Kreisverkehre spezifischen Fahrsituationen zu erheblichen Schwierigkeiten führen. Wenn der Fahrer beispielsweise nicht die gemäß der gewünschten Route vorgesehene Ausfahrtstraße genommen hat, sondern im Kreisverkehr an der vorgegebenen Ausfahrt vorbeigefahren ist, kann er sich anhand der bekannten Manöverschemaansichten nicht ausreichend orientieren. Denn bei den bekannten Manöverschemaansichten werden die Mündungsstraßen des Kreisverkehrs, die nach dem Vorbeifahren an der eigentlich vorgesehenen Ausfahrt für die Orientierung interessant sind, nicht angezeigt, da sie nicht an oder auf der ursprünglich vorgesehenen Route liegen. Die Neuberechnung und Neuanzeige der Manöverschemaansicht in dieser Fahrsituation ist in aller Regel nicht mehr möglich, da die Fahrzeiten im Kreisverkehr außerordentlich kurz sind. Weicht der Fahrer also im Kreisverkehr von der vorgesehenen Route ab, bieten die bekannten Manöverschemaansichten keine ausreichende Orientierung mehr, sondern führen zur Verwirrung.

Um diese beiden Probleme zu vermeiden und dem Fahrer jederzeit eine möglichst intuitive Erkennbarkeit des aktuell zu befahrenden Kreisverkehrs in der Manöverschemaansicht zu bieten, wird gemäß einer besonderen Verfahrensvariante vorgeschlagen, alle Mündungsstraßen, die in den Kreisverkehr einmünden bzw. aus dem Kreisverkehr hinausführen zur Berechnung der Manöverschemaansicht zu analysieren und bei Anzeige der Manöverschemaansicht alle diese Mündungsstraßen anzuzeigen.

Diese Art der Analyse kann beispielsweise dadurch erfolgen, dass ausgehend von den Streckenabschnitten der Route, die als Teil eines Kreisverkehrs gekennzeichnet sind, alle Knotenpunkte und Streckensegmente gesucht werden, die dem jeweils nächsten Streckensegment benachbart sind und ebenfalls mit dem Kreisverkehrsattribut der Datenbank gespeichert sind. Damit sind dann alle Streckensegmente und Knotenpunkte bekannt, die den Kreisverkehr in der Datenbank beschreiben. Anschließend können dann noch alle Knotenpunkte, die Teil des Kreisverkehrs sind, daraufhin überprüft werden, ob an diesen Knotenpunkten Streckensegmente anschließen, die nicht das Kreisverkehrsattribut tragen. Diese Streckensegmente können dann als Teil von Mündungsstraßen identifiziert und später in der Manöverschemaansicht angezeigt werden. Durch die vorgeschlagene Verfahrensvariante ist gewährleistet, dass die in der Manöverschemaansicht angezeigte Anzahl von Mündungsstraßen mit der tatsächlich am Kreisverkehr vorhandenen Anzahl von Mündungsstraßen übereinstimmt, so dass es dem Fahrer insbesondere ermöglicht wird, sich durch Abzählen der Mündungsstraßen im Kreisverkehr zu orientieren.

Für die intuitive Erkennbarkeit der Manöverschemaansicht ist weiterhin von großer Bedeutung, in welcher Weise die Mündungsstraßen dargestellt sind. Insbesondere ist die relative Lage der die Mündungsstraßen symbolisierenden Darstellungselemente relativ zu der den Kreisverkehr symbolisierenden Kreislinie von großer Bedeutung. Um die tatsächliche Lage der Mündungsstraßen am Kreisverkehr, insbesondere den Mündungswinkel, mit dem die Mündungsstraßen in den Kreisverkehr einmünden bzw. aus ihm herausführen, geometrisch korrekt darstellen zu können, wären aufwendige geometrische Analysen der die Mündungsstraßen und den Kreisverkehr beschreibenden Ortsdaten notwendig. Entsprechende Analysen sind rechenzeitaufwändig und deshalb regelmäßig nicht sinnvoll durchführbar. Außerdem haben Benutzerstudien gezeigt, dass die Benutzer entsprechend geometrisch vollständig korrekte Darstellungen für die intuitive Erkennbarkeit des Aufbaus des Kreisverkehrs nicht benötigen.

Es wird deshalb vorgeschlagen, dass unabhängig von der tatsächlichen geometrischen Lage der Mündungsstraßen die Mündungsstraßen jeweils als Strahlenabschnitte angezeigt werden. Diese die Mündungsstraßen symbolisierenden Strahlenabschnitte enden dabei jeweils auf der den Kreisverkehr symbolisierenden Kreislinie bzw. Kreisabschnittslinie, und eine gedachte Verlängerung der Strahlenabschnitte führt strahlenförmig durch den Mittelpunkt der Kreislinie. Im Ergebnis bedeutet diese Art der Darstellung eine Vereinfachung dahingehend, dass unabhängig vom tatsächlichen Einmündungswinkel der Mündungsstraße in den Kreisverkehr der Einmündungswinkel jeweils mit 90° dargestellt ist. Diese Art der vereinfachten Darstellung des Einmündungswinkels ist insbesondere auch deshalb nützlich, da die gleiche Vereinfachung auch bei der Darstellung von Kreisverkehren und ihren Mündungsstraßen an Verkehrsschildern üblich ist. Insofern kann der Benutzer die Darstellung an den Verkehrsschildern eines Kreisverkehrs leicht in Übereinstimmung mit der Darstellung des Kreisverkehrs in der Manöverschemaansicht bringen.

Weiterhin von großer Bedeutung für die intuitive Erkennbarkeit des Aufbaus des Kreisverkehrs mit seinen Mündungsstraßen in der Manöverschemaansicht ist es, dass die relative Lage zwischen den verschiedenen Mündungsstraßen im Wesentlichen mit den tatsächlichen Gegebenheiten übereinstimmt. Insbesondere sollte für den Benutzer in der Manöverschemaansicht gut zu erkennen sein, wie weit er im Kreisverkehr fahren muss, um von einer Mündungsstraße zu einer anderen Mündungsstraße zu gelangen. Dies bedeutet mit anderen Worten, dass es aus der Manöverschemaansicht den tatsächlichen Gegebenheiten entsprechend leicht erkennbar sein sollte, ob der Benutzer nur ganz kurz auf dem Kreisverkehr fahren muss, um die richtige Ausfahrt zu nehmen, oder ob der Kreisverkehr weiter durchfahren werden muss. Dabei sollte es insbesondere ohne Weiteres möglich sein, zu erkennen, ob zwischen zwei Mündungsstraßen ein Viertel, zwei Viertel oder drei Viertel des Kreisverkehrs befahren werden müssen. Eine noch feinere Abstufung der Erkennbarkeit der relativen Lage der einzelnen Mündungsstraßen am Kreisverkehr ist natürlich wünschenswert. Um eine korrekte Darstellung der relativen Lage der Mündungsstraßen am Kreisverkehr zu ermöglichen, können selbstverständlich wiederum aufwändige geometrische Analysen der Geometriedaten des Kreisverkehrs vorgenommen werden. Aber auch für diese Analysen ist üblicherweise die notwendige Rechenzeit bei der Berechnung der Manöverschemaansicht nicht vorhanden.

Es wird deshalb ein vereinfacht durchzuführendes Verfahren zur Darstellung der Relativlage der einzelnen Mündungsstraßen vorgeschlagen. Diese Verfahrensvariante beruht auf der Grundprämisse, dass die einzelnen Mündungsstraßen als Strahlenabschnitte dargestellt werden, deren Verlängerung durch den Mittelpunkt der den Kreisverkehr symbolisierenden Kreislinie verläuft. Unter der Berücksichtigung dieser Prämisse besteht bei der Darstellung der einzelnen Mündungsstraßen nur noch ein Freiheitsgrad, nämlich die Zwischenwinkel zwischen den einzelnen Strahlenabschnitten, mit denen diese relativ zueinander in der Manöverschemaansicht angezeigt werden. Diese Zwischenwinkel bei der Darstellung der Mündungsstraßen in der Manöverschemaansicht sollten dabei möglichst mit dem intuitiven Empfinden des Benutzers bei der Betrachtung einer Straßenkarte übereinstimmen. Um dies zu realisieren, wird vorgeschlagen, dass der Zwischenwinkel zwischen den die Mündungsstraßen in der Manöverschemaansicht darstellenden Strahlenabschnitten in einer Weise gewählt wird, die die Lage der Mündungsstraßen relativ zum tatsächlichen Mittelpunkt des Kreisverkehrs berücksichtigt. Um dies zu ermöglichen, wird zunächst auf jeder der in der Manöverschemaansicht darzustellenden Mündungsstraßen ein Stützpunkt definiert. Einziges Kriterium bei dieser Wahl ist zunächst, dass der Stützpunkt auf der Mündungsstraße liegen muss. Für die Ermittlung des Zwischenwinkels zweier Strahlenabschnitte, die zwei Mündungsstraßen in der Manöverschemaansicht darstellen sollen, wird der Winkel ermittelt, den die beiden Geraden einschließen, die jeweils durch den Stützpunkt der beiden darzustellenden Mündungsstraßen und den Mittelpunkt des Kreisverkehrs verlaufen. Aus dieser einfachen geometrischen Betrachtung ergibt sich dann der Zwischenwinkel zwischen den beiden Strahlenabschnitten, die zwei Mündungsstraßen in der Manöverschemaansicht darstellen. Die sich daraus ergebende Darstellung stimmt sehr gut mit der intuitiven Betrachtungsweise eines tatsächlichen Kreisverkehrs mit seinen Mündungsstraßen durch einen Benutzer überein.

Im praktischen Einsatz kann dieses Verfahren beispielsweise wie folgt zur Anwendung kommen. Zur Darstellung eines Manövers, bei dem der Fahrer einen Kreisverkehr befahren muss, wobei er über eine erste Mündungsstraße einfährt und über eine zweite Mündungsstraße wieder ausfährt, wird standardmäßig der Kreisverkehr als geschlossene Kreislinie dargestellt. Die zur Einfahrt benutzte Mündungsstraße wird standardmäßig als Strahlenabschnitt angezeigt, der an der Anzeigeeinrichtung senkrecht nach unten weist. Die zur Ausfahrt benutzte Mündungsstraße wird ebenfalls als Strahlenabschnitt dargestellt, dessen Verlängerung durch den Mittelpunkt der Kreislinie führt. Der Zwischenwinkel zwischen diesen beiden Strahlenabschnitten wird durch einfache geometrische Analyse des aus den Geometriedaten des Kreisverkehrs abgeleiteten Mittelpunkts des Kreisverkehrs und der beiden auf den Mündungsstraßen definierten Stützpunkte abgeleitet.

Aus den baulichen Gegebenheiten der Einfahrt bzw. Ausfahrt der meisten Mündungsstraßen ergibt sich, dass diese häufig im Bereich unmittelbar vor dem Kreisverkehr eine große Krümmung aufweisen, um dadurch eine vereinfachte Ein- bzw. Ausfahrt für die Kraftfahrzeuge zu ermöglichen. Der unmittelbare Mündungsbereich der Mündungsstraßen ist deshalb für die intuitive Betrachtung und Erkennbarkeit der Geometrie des Kreisverkehrs nicht signifikant. Aus diesem Grund sollte der für die Berechnung des Zwischenwinkels verwendete Stützpunkt nicht auf dem Kreisverkehr bzw. nicht in unmittelbarer Nähe des Mündungspunktes des Kreisverkehrs liegen. Eine deutlich bessere und intuitiv einfachere Erkennbarkeit ergibt sich, wenn zwischen dem zur Berechnung des Zwischenwinkels dienenden Stützpunkt auf der Mündungsstraße und dem Knotenpunkt, an dem diese Mündungsstraße in den Kreisverkehr einmündet, ein ausreichender Abstand vorhanden ist. Dieser Abstand kann betragsmäßig vordefiniert sein, beispielsweise durch die Angabe eines bestimmten Abstands in Metern zwischen dem Mündungspunkt und dem Stützpunkt. Durch diesen Abstand zwischen dem den Mündungspunkt der Mündungsstraße bildenden Knotenpunkt und dem für die Berechnung des Zwischenwinkels dienenden Stützpunkt ist gewährleistet, dass starke Krümmungsradien der Mündungsstraße in unmittelbarer Nähe des Mündungspunkts ausgefiltert werden. Der Abstand zwischen Mündungspunkt und Stützpunkt sollte dabei zugleich auch nicht zu groß sein, um die geometrische Lage der Mündungsstraße am Kreisverkehr noch signifikant widerspiegeln zu können.

Ein weiteres Problem bei der grafischen Darstellung von Kreisverkehrmanövern in der Manöverschemaansicht ist es, dass es unterschiedliche Arten von Straßen gibt, die in einen Kreisverkehr einmünden bzw. aus dem Kreisverkehr herausführen. Handelt es sich um eine übliche Zweibahnstraße, mit einer Zu- und einer Abfahrt in den Kreisverkehr bzw. aus dem Kreisverkehr, wird die Verkehrssituation über die Schemaansicht leicht erkannt. Handelt es sich dagegen um eine Einbahnstraße, die nur in einer Richtung befahren werden kann, kann dies leicht zur Verwirrung des Fahrers beitragen, da er ohne geeignete Kennzeichnung bei Darstellung einer solchen Einbahnstraße in der Manöverschemaansicht annehmen muss, dass er hier zugleich zu- als auch abfahren kann. Dies gilt insbesondere für Einbahnstraßen, die dadurch gebildet werden, dass eine eigentlich durchgehende Fahrbahn durch geeignete Maßnahmen, beispielsweise eine Trennmauer oder -markierung, in zwei unmittelbar zusammen liegende Einbahnstraßen geteilt ist. Diese Art von Einbahnstraßen ist üblicherweise mit dem Attribut "Multidigitized" in den Datenbanken der Kartenhersteller, die das digitale Kartenmaterial zur Verfügung stellen, gekennzeichnet. Um eine möglichst intuitiv gut erkennbare Manöverschemaansicht des Kreisverkehrs aufbauen zu können, sollte eine Analyse der Mündungsstraßen dahingehend durchgeführt werden, ob es sich jeweils um eine Zweibahnstraße mit Zu- und Abfahrt bzw. um eine Einbahnstraße mit nur Zu- oder Abfahrt handelt. Soweit es sich um eine Einbahnstraße handelt, sollte darüber hinaus festgestellt werden, ob es sich um eine Multidigitized-Einbahnstraße handelt. Abhängig von dem Analyseergebnis der Mündungsstraßen kann dann die Darstellung der einzelnen Mündungsstraßentypen differenziert gewählt werden.

Bei der Darstellung von Zweibahnstraßen sollte auf die übliche Darstellung zurückgegriffen werden, welche die Zweibahnstraßen jeweils als Einstrahlenabschnitt in der Manöverschemaansicht anzeigt, wobei der Strahlenabschnitt auf der den Kreisverkehr symbolisierenden Kreislinie endet.

Bei der Darstellung von Einbahnstraßen ist es ebenfalls sinnvoll, diese durch Strahlenabschnitte grafisch in der Manöverschemaansicht zu symbolisieren. Um die Einbahnstraßen von Zweibahnstraßen abzugrenzen, sollte jedoch zusätzlich die zulässige Fahrtrichtung der Einbahnstraße angezeigt werden.

Soweit bei der Analyse der Mündungsstraßen festgestellt wird, dass mehrere Einbahnstraßen, insbesondere Multidigitized-Straßen, am Kreisverkehr vorhanden sind, ist zu prüfen, ob diese eigentlich eine gemeinsame Straße bilden. Durch geeignete geometrische Analyseverfahren ist deshalb zunächst festzustellen, ob zwei Einbahnstraßen eng zueinander benachbart verlaufen. Weiter kann dabei zusätzlich auch noch überprüft werden, ob die beiden Einbahnstraßen gegenläufig sind. Ist dies der Fall, so ist es sinnvoll diese beiden Einbahnstraßen in der Art einer Zweibahnstraße als gemeinsamen Strahlenabschnitt in der Manöverschemaansicht anzuzeigen, da solche paarweise gegenläufig verlaufenden Einbahnstraßen vom Benutzer regelmäßig als gemeinsame Straße angesehen werden.

Besonders einfach kann die Analyse hinsichtlich des Verlaufs der beiden als multidigitized gekennzeichneten Einbahnstraßen durch Betrachtung des Zwischenwinkels, der zur Darstellung der verschiedenen Mündungsstraßen eingesetzt wird, vorgenommen werden. Eng zueinander benachbart verlaufende Einbahnstraßen ergeben nämlich einen kleinen Zwischenwinkel, wohingegen Einbahnstraßen mit großem Abstand einen großen Zwischenwinkel bewirken. Es kann somit ein Grenzwinkel vordefiniert und der zwischen zwei Einbahnstraßen vorhandene Zwischenwinkel mit diesem Grenzwinkel verglichen werden. Bei geeigneter Wahl des Grenzwinkels ergibt dieser Vergleich, dass bei Unterschreitung des Grenzwinkels beide Einbahnstraßen eng benachbart verlaufen und somit gemeinsam dargestellt werden sollen, wohingegen bei Überschreitung des Grenzwinkels die Einbahnstraßen tatsächlich getrennt verlaufen und deshalb als jeweils getrennte Einbahnstraßen in der Manöverschemaansicht darzustellen sind.

Werden zwei Einbahnstraßen durch die vorgeschlagene Analyse als eng zueinander benachbart verlaufend identifiziert und deshalb in der Art einer Zweibahnstraße gemeinsam in der Manöverschemaansicht als ein Strahlenabschnitt dargestellt, stellt sich noch die Frage der relativen Anordnung dieses Strahlenabschnitts, der ja eigentlich zwei Einbahnstraßen symbolisiert. Denn die vorgeschlagenen geometrischen Betrachtungen unter Verwendung des Mittelpunkts des Kreisverkehrs und der Stützpunkte auf den beiden Einbahnstraßen ergeben für die beiden Einbahnstraßen jeweils separate Zwischenwinkel. Um beide Einbahnstraßen in der Manöverschemaansicht geeignet und intuitiv gut erkennbar darstellen zu können, ist es deshalb sinnvoll, den in der Manöverschemaansicht verwendeten Strahlenabschnitt mit einem Zwischenwinkel anzuzeigen, der dem Mittelwert entspricht, der sich aus den Zwischenwinkeln für die beiden getrennten Einbahnstraßen ergibt.

Verschiedene Aspekte und Ausführungsformen der Erfindung sind in den Zeichnungen schematisch dargestellt und werden nachfolgend beispielhaft erläutert.

Es zeigen:
- Fig.1: die Darstellung einer Anzeigeeinrichtung eines mobilen Navigationsgerätes mit eingeblendeter Manöverschemaansicht;
- Fig. 2: die Manöverschemaansicht gemäß Fig. 1 in vergrößerter Darstellung;
- Fig. 3: den Ausschnitt aus einer ein geografisches Gebiet mit Kreisverkehr beschreibenden digitalen Karte;
- Fig. 4: eine fehlerhafte Manöverschemaansicht des Kreisverkehrs gemäß Fig. 3;
- Fig. 5: eine erfindungsgemäße Darstellung der Manöverschemaansicht des Kreisverkehrs gemäß Fig. 3;
- Fig. 6: einen Ausschnitt aus einem geografischen Gebiet mit einer zweiten Ausführungsform eines Kreisverkehrs;
- Fig. 7: eine fehlerhafte Darstellung des Kreisverkehrs gemäß Fig. 6 in einer Manöverschemaansicht;
- Fig. 8: eine erfindungsgemäße Darstellung einer Manöverschemaansicht des Kreisverkehrs gemäß Fig. 6;
- Fig. 9: einen Ausschnitt aus einem geografischen Gebiet mit einer dritten Ausführungsform eines Kreisverkehrs;
- Fig. 10: eine erfindungsgemäße Darstellung einer Manöverschemaansicht des Kreisverkehrs gemäß Fig. 9;
- Fig. 11: eine schematisierte Darstellung der Analyse des Kreisverkehrs gemäß Fig. 9 hinsichtlich der Darstellung von zwei als multidigitized gekennzeichneten Einbahnstraßen;
- Fig. 12: einen Ausschnitt aus einem geografischen Gebiet mit einer weiteren Ausführungsform eines Kreisverkehrs;
- Fig. 13: eine erfindungsgemäße Darstellung einer Manöveransicht des Kreisverkehrs gemäß Fig. 12.

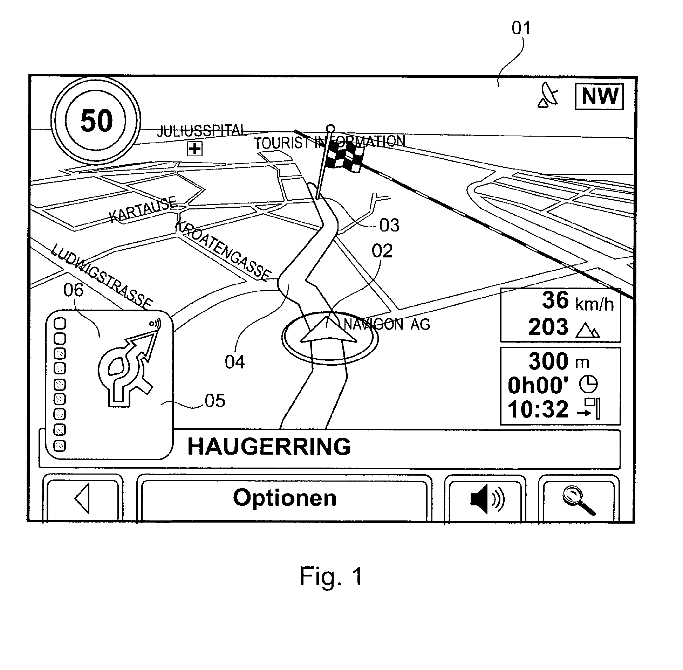

Fig. 1 zeigt den Bildinhalt einer Anzeigeeinrichtung 01, wie er beispielsweise am Bildschirm eines mobilen Navigationsgeräts angezeigt wird. In perspektivischer Ansicht sind die Straßensituation relativ zum aktuellen Standpunkt, der als Pfeilsymbol 02 eingezeigt ist, und die zum Zielpunkt 03 führende Route 04 dargestellt. In der linken unteren Ecke der Anzeigeeinrichtung 01 ist außerdem eine Manöverschemaansicht 05 eingeblendet, die das nächste vom Fahrer auszuführende Manöver zur Einhaltung der geplanten Route schematisiert grafisch darstellt. Das nächste Manöver auf der Route 04 erfordert das Durchfahren eines in Fig. 1 nicht weiter dargestellten Kreisverkehrs, der in der Manöverschemaansicht 05 schematisiert als Kreissymbol 06 dargestellt ist.

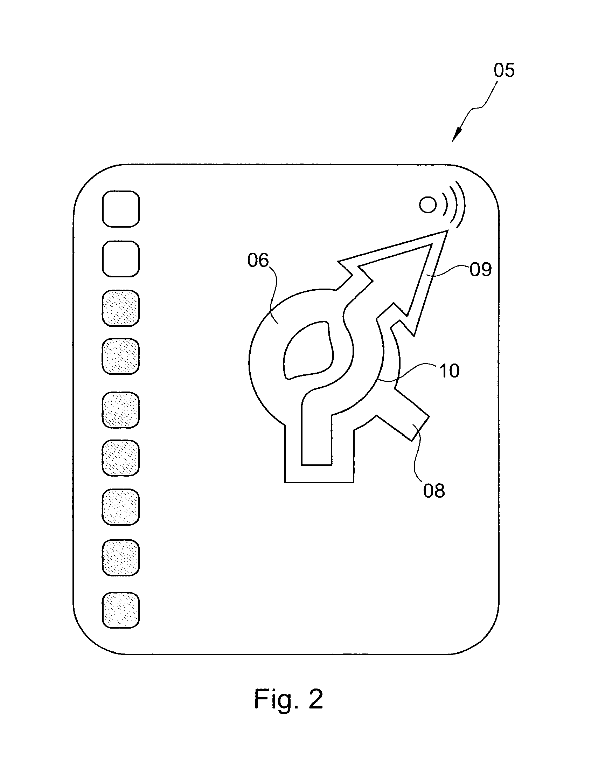

In Fig. 2 ist die Manöverschemaansicht 05 vergrößert dargestellt. An dem auf der Route 04 zu befahrenden Kreisverkehr sind drei Mündungsstraßen vorhanden, die in der Manöverschemaansicht 05 durch drei Strahlenabschnitte 07, 08 und 09 grafisch symbolisierend dargestellt sind. Die Route 04 ist in der Manöverschemaansicht 05 durch einen Bewegungspfeilsymbol 10 grafisch symbolisierend dargestellt. Der Fahrer erkennt, dass er über die durch den Strahlenabschnitt 07 symbolisierte Mündungsstraße in den Kreisverkehr einfahren und über die durch den Strahlenabschnitt 09 symbolisierte Mündungsstraße aus dem Kreisverkehr ausfahren muss.

Die Darstellung gemäß der Manöverschemaansicht 05 entspricht dabei dem vorbekannten Stand der Technik, da alle dargestellten Symbole zur Symbolisierung des durchzuführenden Manövers unmittelbar auf die vom Routingalgorithmus berechnete Route 04 bezogen sind. Das Kreissymbol 06 wird eingezeichnet, da die Route einen Abschnitt eines Kreisverkehrs umfasst. Die Strahlenabschnitte 07 und 09 werden eingezeichnet, weil die Route über diese Streckenabschnitte führt, und der Strahlenabschnitt 08 wird eingezeichnet, weil die entsprechende Mündungsstraße in einem Bereich auf den Kreisverkehr einmündet, der Bestandteil der Route ist. Ob der in der Manöverschemaansicht 05 dargestellte Kreisverkehr darüber hinaus weitere Bestandteile, insbesondere weitere Mündungsstraßen, aufweist, kann anhand der Manöverschemaansicht 05 nicht beurteilt werden, da eine entsprechende Analyse unabhängig von der Route 04 nicht vorgesehen ist.

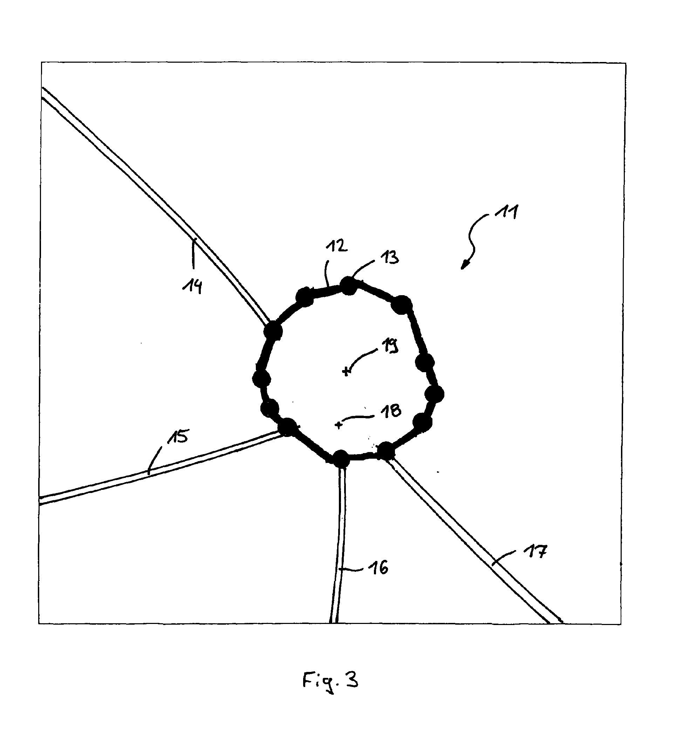

Fig. 3 zeigt schematisiert vereinfacht die Darstellung eines digital gespeicherten Kreisverkehrs 11, der durch die X- und die Y-Koordinaten seiner Streckensegmente 12 und seiner Knotenpunkte 13 in einer digitalen Datenbank gespeichert ist. Zur noch genaueren Beschreibung der Geometrie des Kreisverkehrs 11 können zusätzlich auch noch weitere Stützpunkte entlang der Streckensegmente 12 angeordnet und in der Datenbank gespeichert sein.

Auf den Kreisverkehr 11 münden in dem dargestellten Beispiel vier Mündungsstraßen 14, 15, 16 und 17. Zur Speicherung der Mündungsstraßen 14 bis 17 sind diese ebenfalls in Streckensegmente und Knotenpunkte aufgeteilt, wobei diese zur besseren Erkennbarkeit in Fig. 3 und auch in den nachfolgenden Figuren nicht differenziert dargestellt sind.

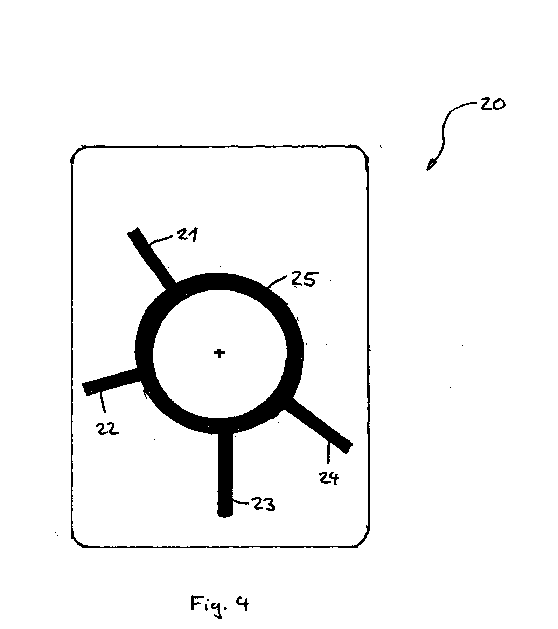

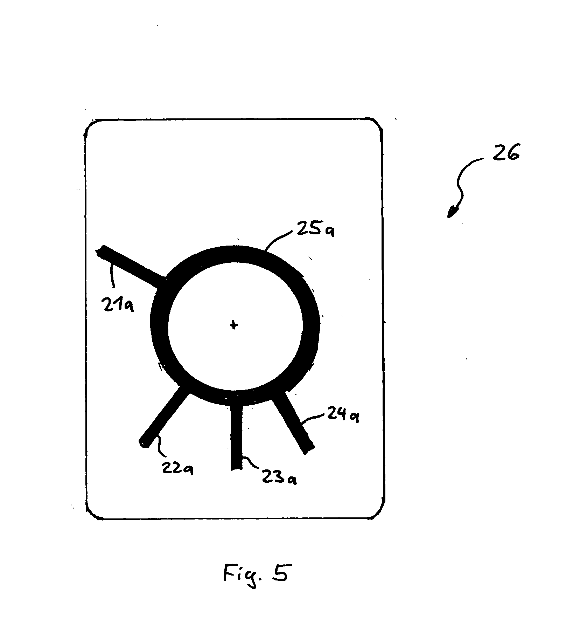

Anhand des Beispiels einer digitalen Karte gemäß Fig. 3 und korrespondierenden Manöverschemaansichten in Fig. 4 und Fig. 5 soll nachfolgend erläutert werden, wie sich das erfindungsgemäß vorgeschlagene Verfahren im Hinblick auf die Mittelpunktermittlung des Kreisverkehrs unterscheidet. Gemäß dem bisher bekannten Stand der Technik wird der Mittelpunkt eines Kreisverkehrs aus dem Schnittpunkt der Verlängerungen der Mündungsstraßen interpoliert. Bei dem in Fig. 3 dargestellten Beispiel ergibt sich damit ein Mittelpunkt 18. Es ist unmittelbar ersichtlich, dass der Mittelpunkt 18 nicht dem tatsächlichen Mittelpunkt 19 des Kreisverkehrs 11 entspricht.

Fig. 4 zeigt eine Manöverschemaansicht 20, die den Kreisverkehr 11 und die Mündungsstraßen 14 bis 17 darstellt, wobei der Mittelpunkt 18 als Relativbezugspunkt dient, um die die Mündungsstraßen 14 bis 17 symbolisierenden Strahlenabschnitte 21 bis 24 zu symbolisieren. Der Kreisverkehr 11 wird durch das Kreissymbol 25 symbolisiert. Aufgrund der unzutreffenden Platzierung des Mittelpunkts 18 werden die Straßenabschnitte 21 bis 24 in einer Relativanordnung in der Manöverschemaansicht 20 angezeigt, die nicht die tatsächliche Anordnung wiedergibt. Insbesondere wird durch den verschobenen Mittelpunkt 18 verursacht, dass der Abstand zwischen den die Mündungsstraßen 14 bis 17 symbolisierenden Strahlenabschnitten 21 bis 24 zu groß ist und dadurch der Eindruck entsteht, dass zwischen der Mündungsstraße 16 und der Mündungsstraße 17 ein Achtel des Kreisverkehrs 11 durchfahren werden muss.

Gemäß dem erfindungsgemäßen Verfahren wird zur Darstellung des Kreisverkehrs 11 und der Mündungsstraßen 14 bis 17 in einer Manöverschemaansicht, wie sie in Fig. 5 gezeigt ist, zunächst aus allen Knotenpunkten 13 oder aus allen Streckensegmenten 12 des Kreisverkehrs der tatsächliche Mittelpunkt 19 berechnet. Bei der erfindungsgemäßen Berechnung der Manöverschemaansicht 26 (siehe Fig. 5) wird die relative Lage der die Mündungsstraßen 14 bis 17 symbolisierenden Streckenabschnitte 21a bis 24a unter Berücksichtigung der Koordinaten des wirklichen Mittelpunkts 19 des Kreisverkehrs 11 abgeleitet. Man erkennt nun, dass insbesondere die Abstände zwischen den Einmündungen der Strahlenabschnitte 21a bis 24a in das Kreissymbol 25a die tatsächlichen Gegebenheiten der Einmündungspunkte der Mündungsstraßen 14 bis 17 in den Kreisverkehr 11 wiedergeben.

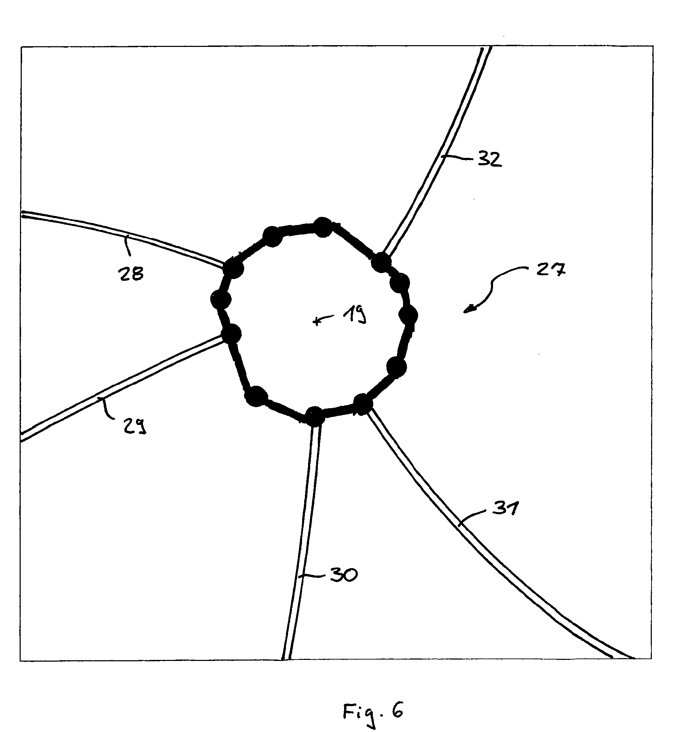

Fig. 6 zeigt ein weiteres Beispiel eines Kreisverkehrs 27, dessen geometrischer Aufbau dem Kreisverkehr 11 entspricht. Am Kreisverkehr 27 sind fünf Mündungsstraßen 28 bis 32 vorhanden.

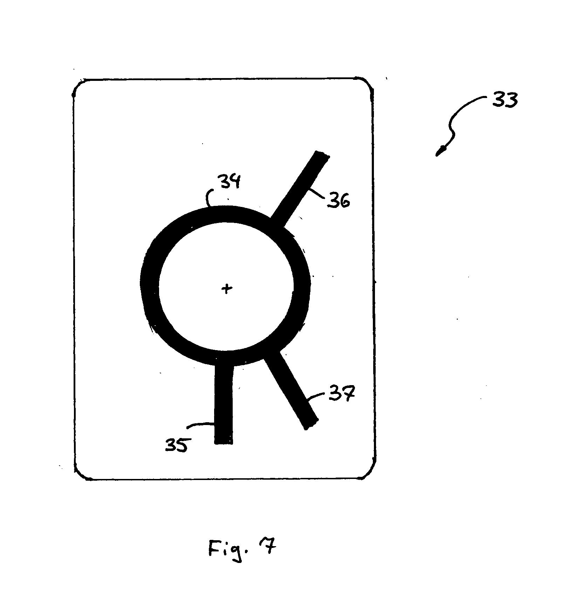

Fig. 7 stellt eine Manöverschemaansicht 33 dar, die dem vorbekannten Stand der Technik entspricht, wenn die am Kreisverkehr 27 vorberechnete Route von der Mündungsstraße 30 zur Mündungsstraße 32 führt. Das heißt, in der Manöverschemaansicht 33 soll ein Fahrmanöver angezeigt werden, bei dem der Fahrer über die Mündungsstraße 30 in den Kreisverkehr 27 einfährt und über die Mündungsstraße 32 wieder aus dem Kreisverkehr 27 ausfährt. Die in Fig. 7 dargestellte Manöverschemaansicht 33 beruht allein auf routenbezogenen Daten, so dass nur Straßen und Kreisverkehre angezeigt werden, die die Route berühren bzw. über die die Route führt. Somit werden in der Manöverschemaansicht 33 ein Kreissymbol 34 zur Symbolisierung des Kreisverkehrs 27, ein Streckenabschnitt 35 zur Symbolisierung der Mündungsstraße 30, ein Streckenabschnitt 36 zur Symbolisierung der Mündungsstraße 32 und ein Streckenabschnitt 37 zur Symbolisierung der Mündungsstraße 31 angezeigt. Strahlenabschnitte zur Symbolisierung der Mündungsstraßen 28 und 29 werden in der Manöverschemaansicht 33 dagegen nicht angezeigt, da diese Mündungsstraßen nicht Bestandteil der Route sind und auch keinen Berührungspunkt mit der Route haben.

Bei Betrachtung der Manöverschemaansicht 33 hat der Benutzer keine intuitiv richtige Vorstellung vom Aufbau des Kreisverkehrs 27. Insbesondere beim Vergleich der Manöverschemaansicht 33 mit Straßenschildern, die den Kreisverkehr 27 mit den Mündungsstraßen 28 bis 32 darstellen, tritt eine erhebliche Diskrepanz auf, da die Mündungsstraßen 28 und 29 an den Straßenschildern angezeigt werden. Auch wenn der Fahrer die Route im Kreisverkehr verlässt und an der Mündungsstraße 32 vorbeifährt, kann er sich nicht mehr ausreichend an der Manöverschemaansicht 33 orientieren, da die nach Passieren der Mündungsstraße 32 nächsten Mündungsstraßen 28 und 29 in der Manöverschemaansicht 33 nicht angezeigt sind.

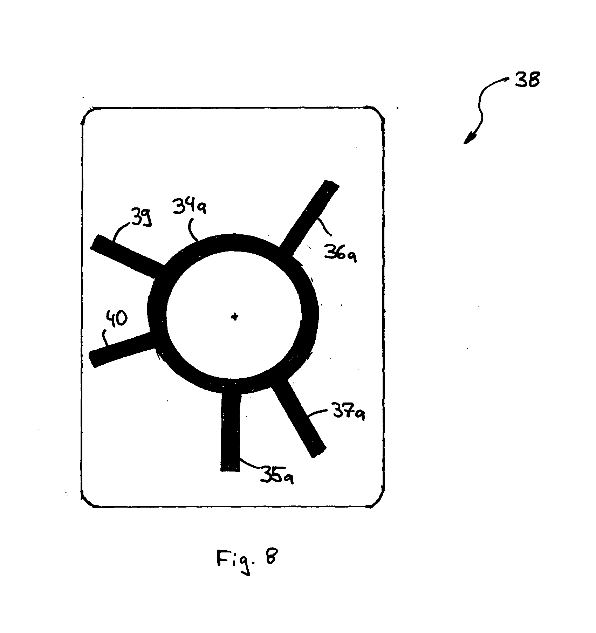

Fig. 8 zeigt eine Manöverschemaansicht 38, wie sie nach einer erfindungsgemäßen Variante berechnet wurde. Der Kreisverkehr 27 wurde hinsichtlich seines Aufbaus, insbesondere hinsichtlich aller in ihn mündenden Mündungsstraßen, vollständig analysiert, so dass alle Mündungsstraßen 28 bis 32 durch die Strahlenabschnitte 35a, 36a, 37a, sowie die zusätzlich angezeigten Streckenabschnitte 39 und 40 zur Symbolisierung der Mündungsstraßen 28 und 29 angezeigt werden. Bei Betrachtung der Manöverschemaansicht 38 hat der Benutzer einen unmittelbaren und intuitiv richtigen Eindruck des Aufbaus des Kreisverkehrs 27.

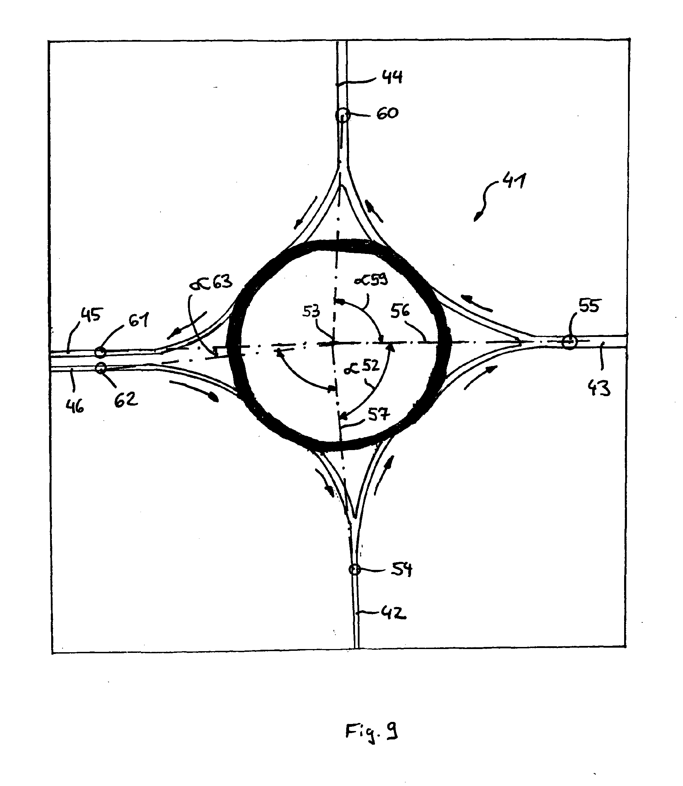

Fig. 9 zeigt einen Kartenausschnitt mit einem Kreisverkehr 41, in den die Mündungsstraßen 42 bis 46 einmünden. Bei den Straßen 42 bis 44 handelt es sich um Zweibahnstraßen, die über getrennte Ein- bzw. Ausfahrten in den Kreisverkehr 41 einmünden. Die Mündungsstraßen 45 und 46 sind dagegen jeweils Einbahnstraßen, die durch bauliche Trennung einer gemeinsamen Fahrbahn gebildet wurden. In der Datenbank sind die beiden Einbahnstraßen 45 und 46 mit dem "multidigitized" Attribut gespeichert.

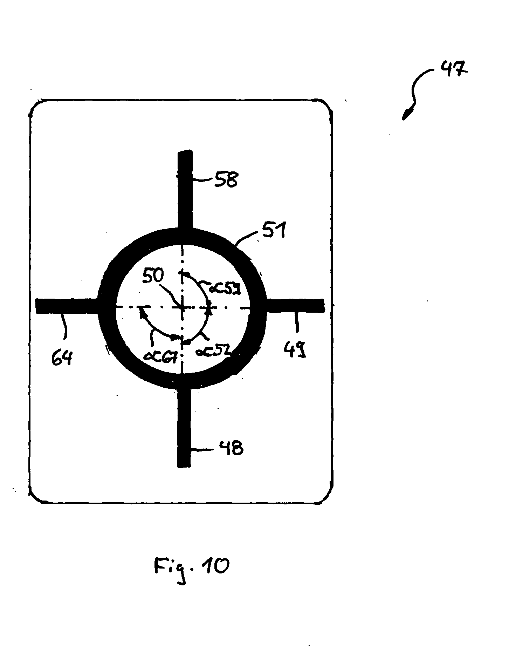

Fig. 10 zeigt eine Manöverschemaansicht 47 zur Darstellung eines Fahrmanövers, bei dem über die Mündungsstraße 42 in den Kreisverkehr 41 eingefahren wird. Die Mündungsstraße 42 wird deshalb als einfahrende Mündungsstraße in der Manöverschemaansicht 47 als nach senkrecht unten weisender Strahlenabschnitt 48 dargestellt. Die Mündungsstraße 43 wird ebenfalls als einfacher Strahlenabschnitt 49 in der Manöverschemaansicht dargestellt. Wie alle Strahlenabschnitte in den erfindungsgemäßen Manöverschemaansichten verläuft die Verlängerung des Strahlenabschnitts 49 dabei durch den Mittelpunkt 50 des den Kreisverkehr 41 symbolisierenden Kreissymbols 51. Um den Zwischenwinkel α52, der den einzigen Freiheitsgrad des Strahlenabschnitts 49 relativ zu dem Strahlenabschnitt 48 darstellt, für die intuitiv richtige Darstellung zu erhalten, werden die Geometriedaten des Kreisverkehrs 41 und der Mündungsstraßen 42 und 43 in einfacher Weise ausgewertet.

Bei dieser Auswertung wird zunächst der tatsächliche Mittelpunkt 53 des Kreisverkehrs 41 durch Addition und anschließende Division der den Kreisverkehr beschreibenden Ortskoordinaten bestimmt. Anschließend werden auf den Mündungsstraßen 42 und 43 jeweils Stützpunkte 54 und 55 platziert. Die Stützpunkte 54 und 55 haben dabei die Eigenschaft, dass sie nicht Bestandteil des Kreisverkehrs sind. Beispielsweise können die Stützpunkte 54 und 55 dadurch definiert sein, dass sie einen bestimmten Abstand zur Fahrbahn des Kreisverkehrs 41 aufweisen. Anschießend wird aus den Koordinaten des Mittelpunktes 53 und der Stützpunkte 54 bzw. 55 und den dadurch definierten Geraden 56 bzw. 57 der Zwischenwinkel α52 berechnet. Damit ist die geometrische Analyse in den Geometriedaten des Kreisverkehrs 41 und den Mündungsstraßen 42 und 43 bereits abgeschlossen, und der Strahlenabschnitt 49 kann relativ zur Lage des Strahlenabschnitts 48 in der Manöverschemaansicht 47 angezeigt werden. Der Zwischenwinkel α52 spiegelt dabei die örtliche Zuordnung zwischen den Mündungsstraßen 42 und 43 intuitiv richtig wider, wobei insbesondere zu beachten ist, dass die starken Krümmungsradien der Einfahrten bzw. Ausfahrten in den Kreisverkehr 41 durch die erfindungsgemäße Berechnungsmethode ausgeblendet sind.

Hinsichtlich der Mündungsstraße 44 wird dieses Verfahren wiederholt und der Strahlenabschnitt 58, der die Mündungsstraße 44 in der Manöverschemaansicht 47 symbolisiert, mit einem Zwischenwinkel α59 relativ zum Strahlenabschnitt 49 in der Manöverschemaansicht 47 angezeigt, der sich aus der geometrischen Analyse des Mittelpunkts 53 des Stützpunkts 55 und des auf der Mündungsstraße 44 liegenden Stützpunkts 60 ergibt.

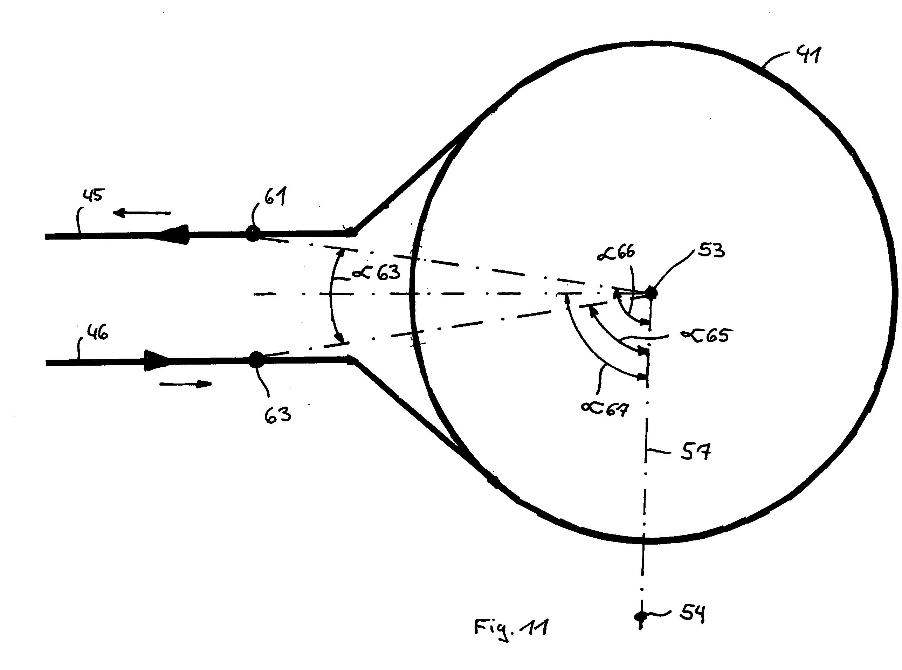

Auch für die beiden Mündungsstraßen 45 und 46, bei denen es sich um Einbahnstraßen mit dem Multidigitized-Attribut handelt, werden durch Auswertung der Stützpunkte 61 und 62 relativ zum Mittelpunkt 53 die entsprechenden Zwischenwinkel bestimmt. Die Auswertung hinsichtlich der Mündungsstraßen 45 und 46 ist in Fig. 11 vergrößert dargestellt, wobei die für die Auswertung der Mündungsstraßen 45 und 46 nicht erforderlichen Straßenelemente nicht dargestellt ist. Durch die Analyse des Kreisverkehrs 41 werden die beiden Mündungsstraßen 45 und 46 als Einbahnstraßen mit Multidigitized-Attribut registriert. Durch die geometrische Auswertung der Stützpunkte 61 und 62 relativ zum Mittelpunkt 53 ist außerdem der Zwischenwinkel α63 bekannt. Der Zwischenwinkel α63 der beiden Einbahnstraßen 45 und 46 wird mit einem vordefinierten Grenzwinkel verglichen. Im dargestellten Beispiel liegt der Zwischenwinkel α63 zwischen den beiden Einbahnstraßen 45 und 46 unterhalb des Grenzwinkels, so dass die beiden Einbahnstraßen 45 und 46 als eng benachbart verlaufend klassifiziert werden. Zwei das Multidigitized-Attribut tragende gegenläufige Einbahnstraßen, die als eng benachbart verlaufend klassifiziert wurden, werden in der Manöverschemaansicht 47 gemeinsam in der Art einer Zweibahnstraße durch einen Strahlenabschnitt 64 symbolisierend grafisch dargestellt. Dies bedeutet mit anderen Worten, obwohl es sich bei den Mündungsstraßen 61 und 62 um Einbahnstraßen handelt, die getrennt digitalisiert sind und das Multidigitized-Attribut tragen, werden diese beiden Straßen in der schematisierten Manöverschemaansicht als eine gemeinsame Zweibahnstraße symbolisch dargestellt. Diese Darstellung entspricht dabei dem intuitiven Empfinden des Benutzers, der derartig eng zusammen verlaufende Einbahnstraßen regelmäßig als eine Straße auffasst.

Bei der Darstellung des Strahlenabschnitts 64 ist noch der Zwischenwinkel α65 zu bestimmen, mit dem der Strahlenabschnitt 64 relativ zum Strahlenabschnitt 48 angezeigt werden soll. Der Zwischenwinkel α67 entspricht dabei dem Mittelwert der Zwischenwinkel α65 und α66, die sich aus der geometrischen Auswertung des Stützpunkts 54 auf der Mündungsstraße 42, dem Mittelpunkt 53 und den beiden Stützpunkten 61 bzw. 62 auf den Mündungsstraßen 45 und 46 ergeben.

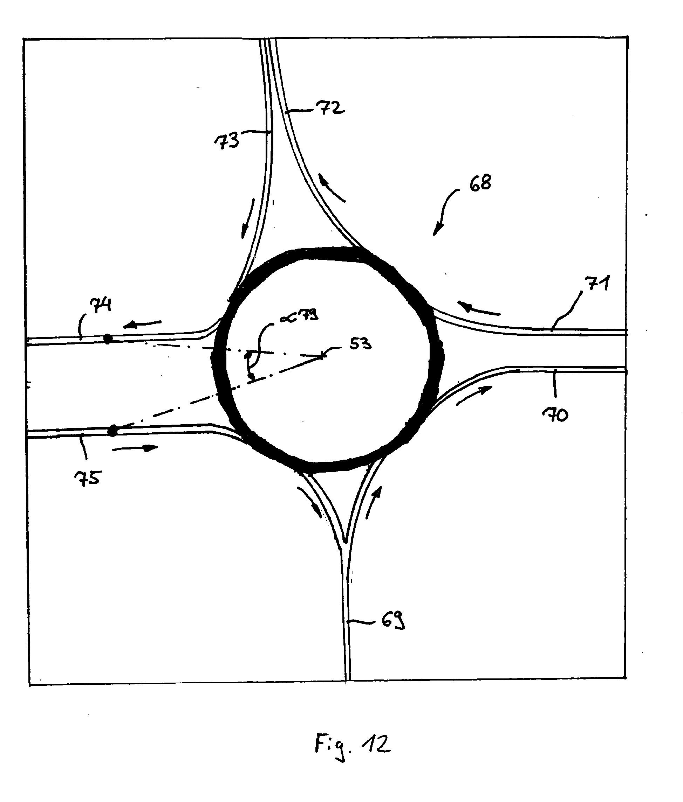

Fig. 12 zeigt einen Kartenausschnitt mit einem Kreisverkehr 68 und den Mündungsstraßen 69 bis 75.

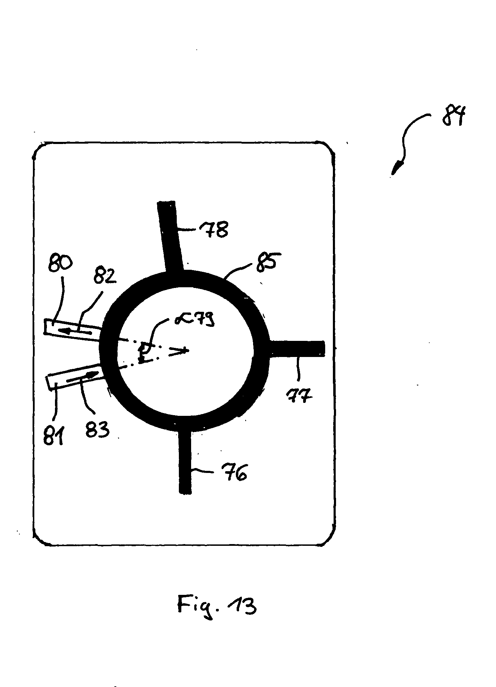

Fig. 13 zeigt eine Manöverschemaansicht 84 zur grafischen Symbolisierung von Manövern im Kreisverkehr 68. Der Kreisverkehr 68 wird durch das Kreissymbol 85 symbolisiert. Die Mündungsstraße 69, die als Zweibahnstraße markiert ist, wird als Strahlenabschnitt 76 dargestellt. Die beiden Einbahnstraßen 70 und 71, die das Multidigitized-Attribut tragen, werden als eng benachbart verlaufend identifiziert und in der Art einer Zweibahnstraße durch den Strahlenabschnitt 77 in der Manöverschemaansicht 84 dargestellt. Gleiches gilt auch für die beiden Einbahnstraßen 72 und 73, die ebenfalls das Multidigitized-Attribut tragen und durch einen Strahlenabschnitt 78 in der Art einer Zweibahnstraße symbolisiert werden.

Die beiden Mündungsstraßen 74 und 75 sind als Einbahnstraßen markiert. Eine Auswertung des Zwischenwinkels α79 ergibt zudem, dass dieser oberhalb des vordefinierten Grenzwinkels liegt, so dass die beiden Einbahnstraßen 74 und 75 als nicht eng benachbart verlaufend klassifiziert werden. Aufgrund dieser Analyse werden die beiden Einbahnstraßen 74 und 75 durch getrennte Strahlenabschnitte 80 und 81 in der Manöverschemaansicht 84 dargestellt. Die Darstellung der Streckenabschnitte 80 und 81 unterscheidet sich dabei von den Zweibahnstraßen symbolisierenden Strahlenabschnitten 76 bis 78. Die Strahlenabschnitte 80 und 81 weisen eine andere, nämlich hellere, Farbmarkierung auf und geben zudem die zulässige Fahrtrichtung der Einbahnstraßen 74 und 75 durch Fahrtrichtungssymbole 82 und 83 an.

### Bezugszeichenliste

| | | | |
|---|---|---|---|
| 01 | Anzeigeeinrichtung eines Navigationsgeräts | 32 | Mündungsstraße |
| | | 33 | Manöverschemaansicht |
| 02 | Symbol für aktuellen Standort | 34 | Kreissymbol |
| 03 | Symbol für Zielpunkt | 35 | Strahlenabschnitt |
| 04 | Symbol für vorberechnete Route | 36 | Strahlenabschnitt |
| | | 37 | Strahlenabschnitt |
| 05 | Manöverschemaansicht | 38 | Manöverschemaansicht |
| 06 | Kreissymbol | 39 | Strahlenabschnitt |
| 07 | Strahlenabschnitt | 40 | Strahlenabschnitt |
| 08 | Strahlenabschnitt | 41 | Kreisverkehr |
| 09 | Strahlenabschnitt | 42 | Mündungsstraße |
| 10 | Routensymbol | 43 | Mündungsstraße |
| 11 | Kreisverkehr | 44 | Mündungsstraße |
| 12 | Streckensegment | 45 | Mündungsstraße |
| 13 | Knotenpunkt | 46 | Mündungsstraße |
| 14 | Mündungsstraße | 47 | Manöverschemaansicht |
| 15 | Mündungsstraße | 48 | Strahlenabschnitt |
| 16 | Mündungsstraße | 49 | Strahlenabschnitt |
| 17 | Mündungsstraße | 50 | Mittelpunkt |
| 18 | Falscher Mittelpunkt | 51 | Kreissymbol |
| 19 | Richtiger Mittelpunkt | 52 | Zwischenwinkel α |
| 20 | Manöverschemaansicht | 53 | Mittelpunkt |
| 21 | Strahlenabschnitt | 54 | Stützpunkt |
| 22 | Strahlenabschnitt | 55 | Stützpunkt |
| 23 | Strahlenabschnitt | 56 | Gerade |
| 24 | Strahlenabschnitt | 57 | Gerade |
| 25 | Kreissymbol | 58 | Strahlenabschnitt |
| 26 | Manöverschemaansicht | 59 | Zwischenwinkel α |
| 27 | Kreisverkehr | 60 | Stützpunkt |
| 28 | Mündungsstraße | 61 | Stützpunkt |
| 29 | Mündungsstraße | 62 | Stützpunkt |
| 30 | Mündungsstraße | 63 | Zwischenwinkel α |
| 31 | Mündungsstraße | | |
| 64 | Strahlenabschnitt | | |
| 65 | Zwischenwinkel α | | |
| 66 | Zwischenwinkel α | | |
| 67 | Zwischenwinkel α | | |
| 68 | Kreisverkehr | | |
| 69 | Mündungsstraße | | |
| 70 | Mündungsstraße | | |
| 71 | Mündungsstraße | | |
| 72 | Mündungsstraße | | |
| 73 | Mündungsstraße | | |
| 74 | Mündungsstraße | | |
| 75 | Mündungsstraße | | |
| 76 | Strahlenabschnitt | | |
| 77 | Strahlenabschnitt | | |
| 78 | Strahlenabschnitt | | |
| 79 | Zwischenwinkel α | | |
| 80 | Strahlenabschnitt | | |
| 81 | Strahlenabschnitt | | |
| 82 | Fahrtrichtungssymbol | | |
| 83 | Fahrtrichtungssymbol | | |
| 84 | Manöverschemaansicht | | |
| 85 | Kreissymbol | | |

## Patentansprüche

1. Verfahren zum Betrieb eines Navigationssystems mit folgenden Verfahrensschritten:
a) Berechnung einer Route (04) von einem Startpunkt zu einem Zielpunkt (03), wobei die Route (04) aus einer Folge von Streckensegmenten (12) und Knotenpunkten (13) zwischen den Streckensegmenten (12) besteht, die mit einem Routenberechnungsverfahren aus einer Datenbank, in der ein geographisches Gebiet durch Streckensegmente (12) und Knotenpunkte (13) beschrieben ist, selektiert wird,
b) Berechnung zumindest einer Manöveranweisung, die Anweisungen für den Benutzer enthält, um ausgehend vom aktuellen Standpunkt der Route (04) zu folgen,
c) Berechnung und Anzeige einer Manöverschemaansicht (05, 20, 26, 33, 38, 47, 84) an einer Anzeigeeinrichtung, wobei die Manöverschemaansicht (05, 20, 26, 33, 38, 47, 84) die Manöveranweisung schematisiert graphisch darstellt,
**dadurch gekennzeichnet,**
**dass** bei der Berechnung der Manöverschemaansicht (05, 20, 26, 33, 38, 47, 84) auch benachbarte Knotenpunkte (13), die nicht auf der Route (04) liegen, und/oder benachbarte Streckensegmente (12), die nicht auf der Route (04) liegen und keinen Knotenpunkt (13) auf der Route (04) berühren, analysiert werden, wobei bei Anzeige der Manöverschemaansicht (05, 20, 26, 33, 38, 47, 84) zumindest ein Teil der benachbarten Streckensegmente (12) und/oder benachbarten Knotenpunkte (13) ergänzend zu der die Route (04) darstellenden Manöveranweisung (05, 20, 26, 33, 38, 47, 84) angezeigt wird.

2. Verfahren nach Anspruch 1,
**dadurch gekennzeichnet,**
**dass** bei der Berechnung der Manöverschemaansicht (05, 20, 26, 33, 38, 47, 84) zur graphisch schematisierten Darstellung eines Manövers in einem Kreisverkehr (11, 27, 41, 68) auch Knotenpunkte (13) des Kreisverkehrs (11, 27, 41, 68) und/oder Streckensegmente (13) des Kreisverkehrs (11, 27, 41, 68), die nicht auf der Route (04) liegen, und/oder Streckensegmente (13), die nicht Teil des Kreisverkehrs (11, 27, 41, 68) sind und zumindest einen Knotenpunkt (13) des Kreisverkehrs (11, 27, 41, 68) berühren, insbesondere nicht auf der Route (04) liegende Einfahrten und Ausfahrten des Kreisverkehrs (11, 27, 41, 68), analysiert werden, wobei bei Anzeige der Manöverschemaansicht (05, 20, 26, 33, 38, 47, 84) zumindest ein Teil dieser Knotenpunkte (13) und/oder Streckensegmente (12) zusätzlich angezeigt wird.

3. Verfahren nach Anspruch 2,
**dadurch gekennzeichnet,**
**dass** bei der Berechnung der Manöverschemaansicht (05, 20, 26, 33, 38, 47, 84) des Kreisverkehrs (11, 27, 41, 68) alle Streckensegmente (12) und/oder alle Knotenpunkte (13), die Bestandteil des Kreisverkehrs (11, 27, 41, 68) sind, und/oder alle Streckensegmente (12) des Kreisverkehrs (11, 27, 41, 68), die einen Knotenpunkt (13) des Kreisverkehrs (11, 27, 41, 68) berühren, insbesondere Einfahrten und Ausfahrten des Kreisverkehrs (11, 27, 41, 68), analysiert und bei Anzeige der Manöverschemaansicht (05, 20, 26, 33, 38, 47, 84) angezeigt werden.

4. Verfahren nach Anspruch 2 oder 3,
**dadurch gekennzeichnet,**
**dass** aus den Daten der Streckensegmente (12) und/oder Knotenpunkte (13), die Bestandteil des Kreisverkehrs (11, 27, 41, 68) sind, die Lage des Mittelpunktes (19, 53) des Kreisverkehrs (11, 27, 41, 68) abgeleitet und bei der Berechnung und Anzeige der Manöverschemaansicht (05, 20, 26, 33, 38, 47, 84) berücksichtigt wird.

5. Verfahren nach Anspruch 4,
**dadurch gekennzeichnet,**
**dass** zur Berechnung der X-Koordinate des Mittelpunktes (19, 53) des Kreisverkehrs (11, 27, 41, 68) alle X-Koordinaten der Knotenpunkte (13) und/oder der Streckensegmente (12), die Bestandteil des Kreisverkehrs (11, 27, 41, 68) sind, addiert werden und die Summe durch die Anzahl der Knotenpunkte (13) und/oder Streckensegmente (12) dividiert wird, und dass zur Berechnung der Y-Koordinate des Mittelpunktes (19, 53) des Kreisverkehrs (11, 27, 41, 68) alle Y-Koordinaten der Knotenpunkte (13) und/oder der Streckensegmente (12), die Bestandteil des Kreisverkehrs (11, 27, 41, 68) sind, addiert werden und die Summe durch die Anzahl der Knotenpunkte (13) und/oder Streckensegmente (12) dividiert wird.

6. Verfahren nach einem der Ansprüche 2 bis 5,
**dadurch gekennzeichnet,**
**dass** alle Straßen (Mündungsstraßen) (14, 15, 16, 17, 28, 29, 30, 31, 32, 42, 43, 44, 45, 46, 69, 70, 71, 72, 73, 74, 75), die in einen Kreisverkehr (11, 27, 41, 68) einmünden und/oder aus dem Kreisverkehr (11, 27, 41, 68) hinausführen, bei der Berechnung der Manöverschemaansicht (05, 20, 26, 33, 38, 47, 84) analysiert und bei Anzeige der Manöverschemaansicht (05, 20, 26, 33, 38, 47, 84) schematisch angezeigt werden.

7. Verfahren nach einem der Ansprüche 2 bis 6,
**dadurch gekennzeichnet,**
**dass** die Mündungsstraßen (14, 15, 16, 17, 28, 29, 30, 31, 32, 42, 43, 44, 45, 46, 69, 70, 71, 72, 73, 74, 75) in der Manöverschemaansicht (05, 20, 26, 33, 38, 47, 84) symbolisierend als Strahlenabschnitte (07, 08, 09, 21, 22, 23, 24, 35, 36, 39, 40, 48, 49, 58, 64, 76, 77, 78, 80, 81) angezeigt werden, wobei die Strahlenabschnitte (07, 08, 09, 21, 22, 23, 24, 35, 36, 39, 40, 48, 49, 58, 64, 76, 77, 78, 80, 81) auf einem den Kreisverkehr (11, 27, 41, 68) symbolisierenden Kreissymbol (25, 34, 51, 85) enden und die Verlängerung der Strahlenabschnitte (07, 08, 09, 21, 22, 23, 24, 35, 36, 39, 40, 48, 49, 58, 64, 76, 77, 78, 80, 81) strahlenförmig durch den Mittelpunkt (19, 53) des Kreissymbols (25, 34, 51, 85) führt.

8. Verfahren nach einem der Ansprüche 2 bis 7,
**dadurch gekennzeichnet,**
**dass** zwei Strahlenabschnitte (48, 49), die zwei getrennt voneinander in einen Kreisverkehr (41) einmündende und/oder aus dem Kreisverkehr (41) hinausführende Mündungsstraßen (42, 43) in der Manöverschemaansicht (47) symbolisieren, strahlenförmig mit einem Zwischenwinkel (α52) in der Manöverschemaansicht (47) angezeigt werden, wobei der Zwischenwinkel (α52) dem Winkel entspricht, den zwei Geraden (56, 57) einschließen, und wobei die erste Gerade (57) durch den berechneten Mittelpunkt (53) des Kreisverkehrs (41) und durch einen ersten Stützpunkt (54), der auf der ersten Mündungsstraße (54) liegt, definiert ist, und wobei die zweite Gerade (56) durch den berechneten Mittelpunkt (53) des Kreisverkehrs (41) und durch einen zweiten Stützpunkt (55) auf der zweiten Mündungsstraße (55) definiert ist.

9. Verfahren nach Anspruch 9,
**dadurch gekennzeichnet,**
**dass** ein zur Berechnung eines Zwischenwinkels (α52, α59, α63, α65, α66, α67, α79) dienender Stützpunkt (54, 55, 60, 61, 62) auf einer Mündungsstraße (42, 42, 44, 45, 46, 74, 75) so angeordnet ist, dass zwischen dem Stützpunkt (54, 55, 60, 61, 62) und dem Knotenpunkt (13), an dem die Mündungsstraße (42, 42, 44, 45, 46, 74, 75) den Kreisverkehr (41, 68) berührt, ein, insbesondere betragsmäßig vordefinierter, Abstand vorhanden ist.

10. Verfahren nach einem der Ansprüche 2 bis 9,
**dadurch gekennzeichnet,**
**dass** bei der Analyse der Mündungsstraßen (14, 15, 16, 17, 28, 29, 30, 31, 32, 42, 43, 44, 45, 46, 69, 70, 71, 72, 73, 74, 75) festgestellt wird, ob es sich
a) um eine Zweibahnstraße (14, 15, 16, 17, 28, 29, 30, 31, 32, 42, 43, 44, 69, 70, 71, 72, 73) mit Zu- und Abfahrt, oder
b) um eine Einbahnstraße (45, 46, 74, 75) mit einer Zu- oder Abfahrt, insbesondere um eine Straße, die in der das geographische Gebiet beschreibenden Datenbank als "Multidigitized" **gekennzeichnet** ist, handelt.

11. Verfahren nach Anspruch 10,
**dadurch gekennzeichnet,**
**dass** eine Zweibahnstraße (14, 15, 16, 17, 28, 29, 30, 31, 32, 42, 43, 44, 69, 70, 71, 72, 73) in der Manöverschemaansicht (05, 20, 26, 33, 38, 47, 84) symbolisierend als ein Strahlenabschnitt (07, 08, 09, 21, 22, 23, 24, 35, 36, 39, 40, 48, 49, 58, 76, 77, 78) angezeigt wird, der auf dem den Kreisverkehr (11, 27, 41, 68) symbolisierenden Kreissymbol (25, 34, 51, 85) endet.

12. Verfahren nach Anspruch 10 oder 11,
**dadurch gekennzeichnet,**
**dass** eine Einbahnstraße (74, 75) mit ihrer Zu- oder Abfahrt in der Manöverschemaansicht symbolisierend als ein Strahlenabschnitt (80, 81) angezeigt wird, der auf dem den Kreisverkehr (68) symbolisierenden Kreissymbol (25, 34, 51, 85) endet, wobei zusätzlich die zulässige Fahrtrichtung symbolisierend, insbesondere mit einem Fahrtrichtungssymbol (82, 83), angezeigt wird.

13. Verfahren nach einem der Ansprüche 10 bis 12,
**dadurch gekennzeichnet,**
**dass** bei der Analyse der Mündungsstraßen (14, 15, 16, 17, 28, 29, 30, 31, 32, 42, 43, 44, 45, 46, 69, 70, 71, 72, 73, 74, 75) zusätzlich festgestellt wird, ob mehrere Einbahnstraßen (45, 46, 74, 75), insbesondere mehrere "Multidigitized"-Straßen, am Kreisverkehr vorhanden (11, 27, 41, 68) sind, wobei zwei, insbesondere gegenläufige, Einbahnstraßen (45, 46) bei der Anzeige der Manöverschemaansicht (47) paarweise gemeinsam in der Art einer Zweibahnstraße als ein gemeinsamer Strahlenabschnitt (64) angezeigt werden, wenn die beiden Einbahnstraßen (45, 46) eng zueinander benachbart verlaufen.

14. Verfahren nach Anspruch 13,
**dadurch gekennzeichnet,**
**dass** zwei Einbahnstraßen (45, 46) als eng zueinander benachbart verlaufend identifiziert werden, wenn der Zwischenwinkel (α63) zwischen den beiden Einbahnstraßen (45, 46) kleiner als ein vordefinierter Grenzwinkel ist.

15. Verfahren nach Anspruch 13 oder14,
**dadurch gekennzeichnet,**
**dass** der in der Manöverschemaansicht (47) darzustellende Zwischenwinkel (α67) zwischen einem eine Mündungsstraße symbolisierenden ersten Strahlenabschnitt (48) und einem zwei Einbahnstraßen (45, 46) in der Art einer Zweibahnstraße gemeinsam symbolisierenden zweiten Strahlenabschnitt (64) einem Mittelwert aus einem Zwischenwinkel (α65) und einem Zwischenwinkel (α66) entspricht, wobei der Zwischenwinkel (α65) aus dem Winkel zwischen der Mündungsstraße (42) und der ersten Einbahnstraße (46) abgeleitet ist, und wobei der Zwischenwinkel (α66) aus dem Winkel zwischen der Mündungsstraße (42) und der zweiten Einbahnstraße (45) abgeleitet ist.
